# FASCICULE DE BREVET EUROPEEN

(11) **EP 0 835 710 B1**
(45) Date de publication et mention de la délivrance du brevet: **06.02.2002**
(21) Numéro de dépôt: 97470023.9
(22) Date de dépôt: 26.09.1997
(51) Int. Cl.: B23D 51/12

(54) **Monture de scie à métaux du type archet monobloc avec dispositif de mise en tension de lame**
Monoblockbügelsäge mit Sägeblattspannvorrichtung
Monobloc hacksaw frame with saw blade tensioning device

(30) Priorité: 10.10.1996 FR 9612528
(43) Date de publication de la demande: 15.04.1998
(73) Titulaire: Sicfo Stanley SA, 25000 Besançon (FR)
(72) Inventeur: Ranieri, Eric, 25000 Besancon (FR)
(74) Mandataire: Poupon, Michel

(56) Documents cités:
- FR-A- 580 258
- FR-A- 2 663 574
- GB-A- 189 070
- US-A- 2 546 660
- US-A- 3 327 748

## Description

La présente invention a pour objet une monture de scie à métaux de type archet monobloc selon le préambule de la revendication 1 comportant un cintre prolongé à son extrémité arrière d'une poignée revolver, pourvue d'une branche assurant la protection de la main, ladite branche rejoignant la poignée en partie inférieure, et incorporant un mécanisme de mise en tension de la lame.

L'utilisateur d'une scie à métaux doit procéder au changement de la lame de son outil soit régulièrement du fait de l'usure de celle-ci, soit pour changer de type de lame suivant le travail de coupe spécifique à effectuer. Tous ces changements de lame font que la tension de la lame est de moins en moins précise.

On a déjà proposé pour remédier à ce problème des scies à métaux comportant des dispositifs de mise en tension de lame réglables.

Ainsi un tel dispositif a été décrit dans la demande de brevet FR 2 624 780; représentant p.e. l'état de la technique la plus proche.

Ce dispositif consiste en un levier profilé agencé avec une forme en came susceptible de venir en contre-appui puis basculement sur la face en regard du bras porte-lame, le levier étant associé par sa partie inférieure à l'extrémité extérieure de la monture de l'organe de retenue de mise en tension, ledit organe permettant un réglage en tension par la position d'un écrou sur l'organe.

Ce dispositif d'une mise en oeuvre relativement sommaire ne permet pas un réglage réellement précis de la lame, la position de l'écrou destiné à cette fonction ne pouvant varier que par tour complet.

Dans les documents US 4 367 779 et US 4 466 471, on a proposé des scies à métaux avec un mécanisme pour ajuster la tension de la lame consistant en un levier dans la poignée des scies qui pivote pour créer une tension sur la lame par l'intermédiaire d'une tige qui agit sur un bras de levier, le réglage de la tension s'effectuant, dans les deux dispositifs, en faisant varier la longueur de la tige.

Même s'ils donnent satisfaction, ces dispositifs sont d'une mise en oeuvre complexe d'une part et, d'autre part le nombre important de pièces constitutives desdits dispositifs font qu'ils sont relativement fragiles d'un point de vue mécanique.

La présente invention a pour but de remédier aux inconvénients des dispositifs de l'art antérieur tel que présenté ci-dessus, en permettant à chaque utilisateur de prérégler la tension de la lame de la scie.

Un autre but de l'invention est de permettre un montage rapide de la lame en limitant le nombre de manipulations au niveau de la monture.

Conformément à l'invention on propose à cette fin une monture de scie à métaux du type archet monobloc comprenant un cintre prolongé d'une part à son extrémité arrière d'une poignée revolver et d'une branche de protection et d'autre part à son extrémité avant d'une branche comportant à son extrémité un téton d'accrochage recevant l'une des deux extrémités d'une lame et comprenant un dispositif de mise en tension de lame, caractérisé en ce que ledit dispositif de mise en tension de lame comporte un système de réglage de tension de lame, ledit dispositif de mise en tension consistant en un levier fixé par un axe d'articulation à une chape d'articulation venant en partie arrière de la branche de protection, ledit axe d'articulation constituant l'axe de rotation du levier, ledit système de réglage de tension de la lame consistant en un support de lame recevant l'autre extrémité de la lame et comportant une lumière permettant le passage de l'axe d'articulation, une tige filetée étant solidarisée d'une part en liaison permanente au support de lame et d'autre part en articulation avec le levier par un axe d'articulation percé d'un trou lissé permettant le passage de la tige filetée sur laquelle est vissée une molette, ladite molette faisant appui sur l'axe d'articulation percé.

La monture de scie comporte notamment en association : une poignée, une branche arrière du cintre, une chape d'articulation du levier, une partie inférieure de la poignée de forme conjuguée au levier et assurant la protection des organes de réglage tension, le cintre de section évolutive galbé vers la lame, une zone d'appui ergonomique et de positionnement du pouce sur la branche supérieure du cintre, une zone d'appui de la lame et l'ergot de maintien de lame au niveau de l'extrémité inférieure de la branche avant du cintre.

On comprendra mieux l'invention à l'aide de la description qui suit faite en référence aux figures annexées dans lesquelles :
- la **figure 1** est une vue de côté de la monture de scie suivant l'invention, avec représentation écorchée de la partie inférieure de la poignée incorporant le système de réglage et où le système de mise en tension de lame est en position fermée ;
- la **figure 2** est une vue identique à la figure 1, où le système de mise en tension de la lame est en position ouverte ;
- la **figure 3** est une vue en éclaté des organes de réglage ;
- la **figure 4** est une vue en perspective d'un support de lame ;
- la **figure 5a** est une vue de dessus du levier de mise en tension de la lame;
- la **figure 5b** est une vue en coupe suivant BB du levier de la figure 5a ;
- la **figure 6** est une vue en coupe suivant AA d'un cintre suivant la figure 1 ;
- les **figures 7a et 7b** sont des vues de côté d'un système de réglage de tension de lame à différents réglages de tension de lame ;
- la **figure 8** est une vue de côté de la partie avant du cintre lors du positionnement de la lame ;
- la **figure 9** est une vue de côté d'une lame métallique ;
- la **figure 10** est une vue de côté en coupe longitudinale de la monture de scie suivant l'invention illustrant le positionnement de la lame métallique représentée sur la figure 9 ;
- la **figure 11** est une vue en coupe suivant AA d'un cintre suivant la figure 10.

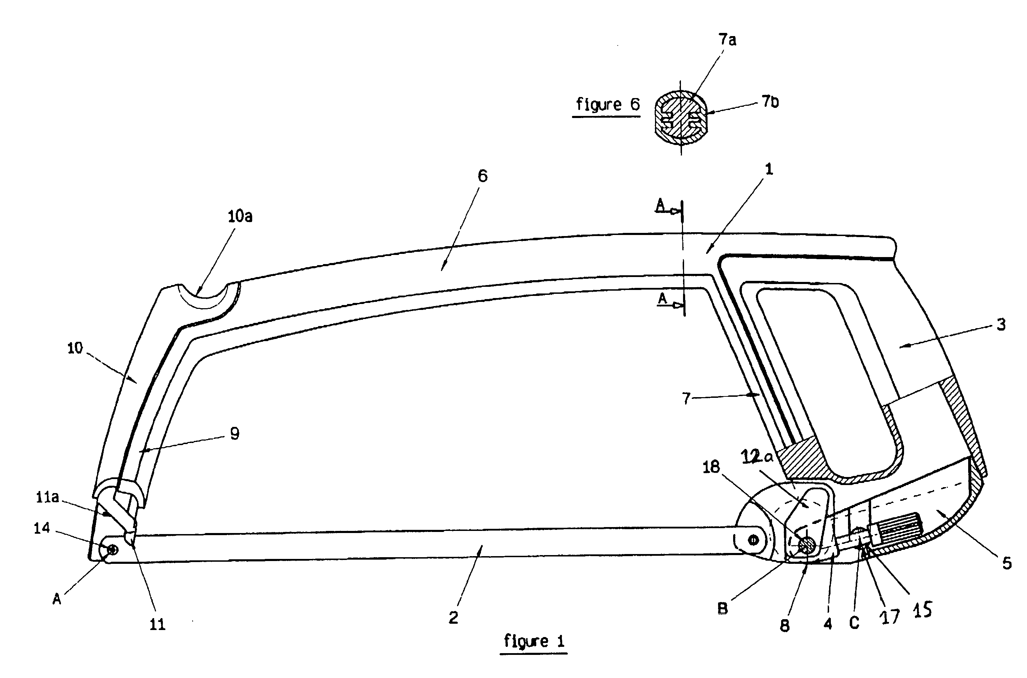

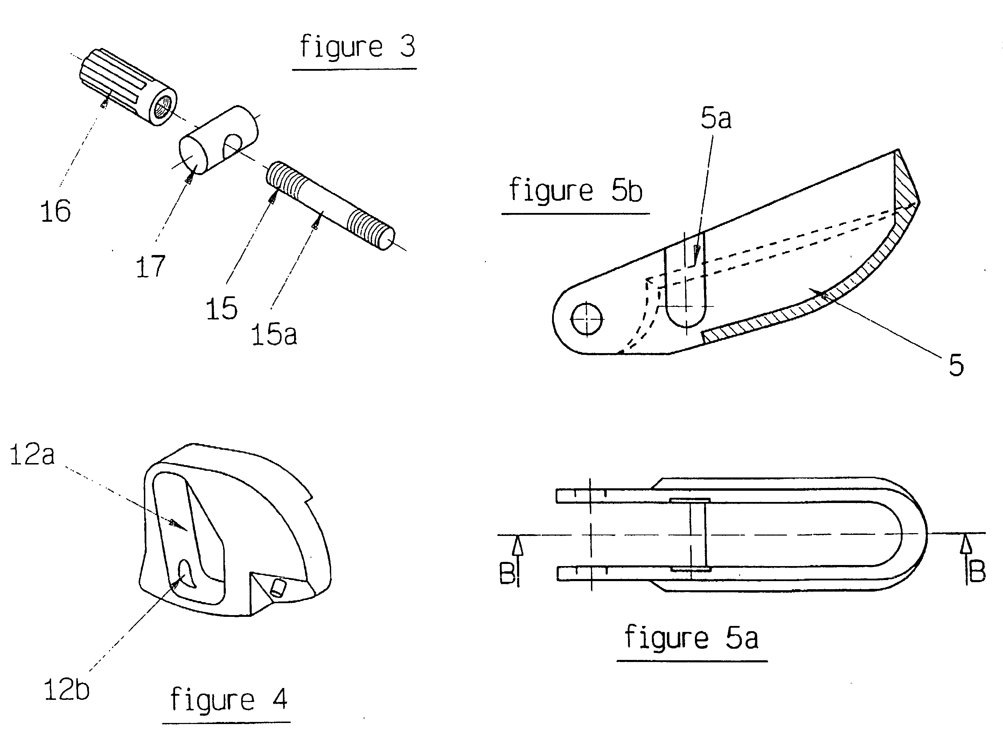

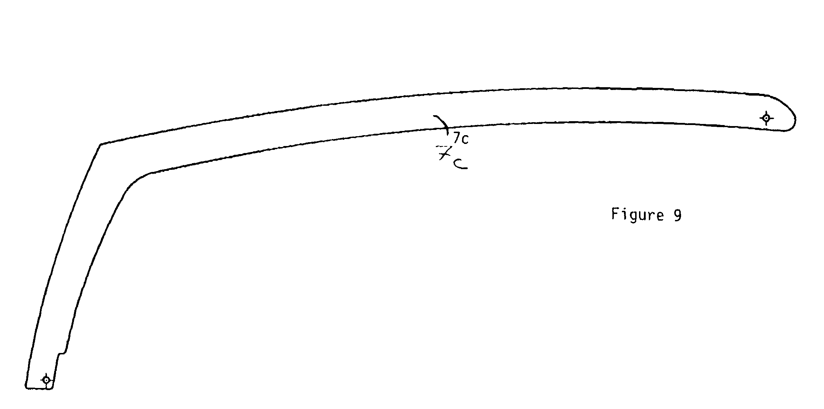

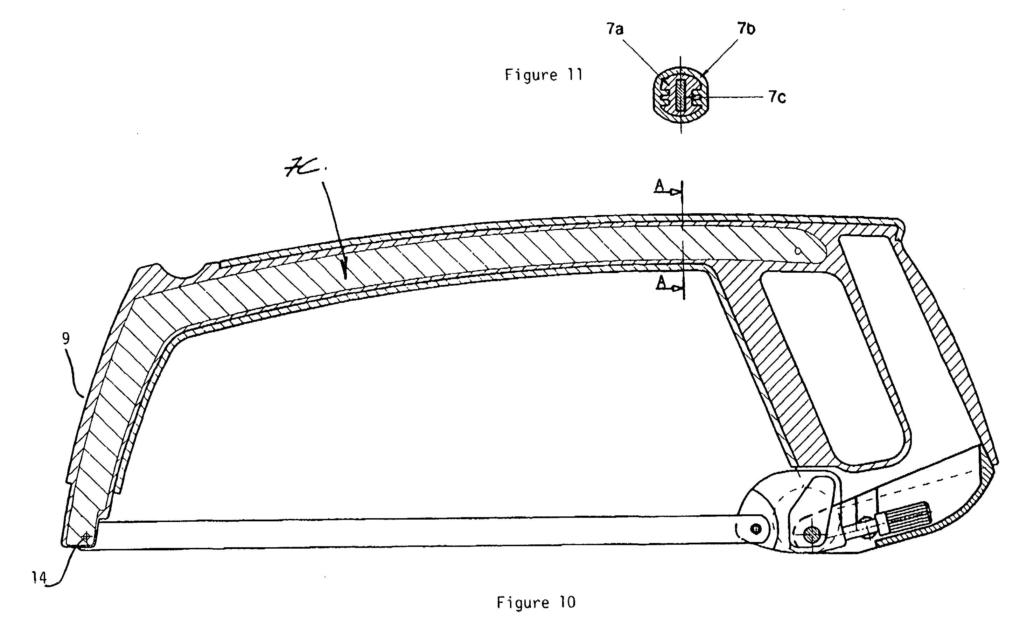

En se référant aux figures 1 à 11, on voit que la monture de scie à métaux (1) de type archet selon le mode d'exécution représenté comprend un cintre (6) prolongé à son extrémité arrière d'une poignée revolver (3) et d'une branche de protection (7) pour protéger la main de l'utilisateur .

La poignée revolver (3) intègre dans sa partie inférieure un système de réglage de tension (4).

La lame (2) est fixée par ses deux extrémités, d'une part à l'extrémité de la branche (9) comportant un téton d'accrochage (14) et, d'autre part à un support de lame (12) comportant un téton d'accrochage (13). Le support de lame (12) constitue un des éléments du système de réglage de tension.

La branche de protection (7) comporte dans son prolongement inférieur une chape d'articulation (8) dans laquelle est aménagé un trou pour recevoir un axe d'articulation (18) qui permet l'assemblage d'un levier (5) et qui constitue l'axe de rotation dudit levier (5).

En outre, la partie inférieure de la poignée revolver (3) située entre l'arrière de la chape d'articulation et le levier (5) est de forme conjuguée au système de réglage de façon à recevoir ledit système de réglage de tension de lame lorsque le levier (5) est dans une position fermée et auto-bloquée.

Le support de lame (12) comporte une lumière (12a) à travers laquelle passe, avec une liberté de latitude dans une direction sensiblement perpendiculaire à un axe longitudinal de la lame, l'axe d'articulation (18).

De manière préférentielle, la lumière (12a), qui peut être oblongue, a sensiblement la forme d'un trapèze rectangle dont les angles sont arrondis.

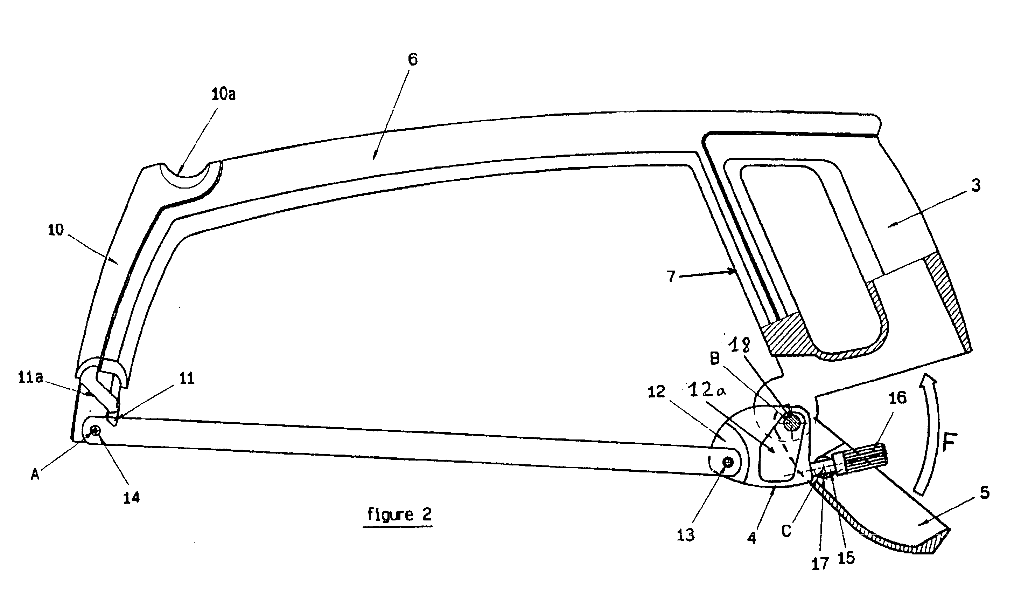

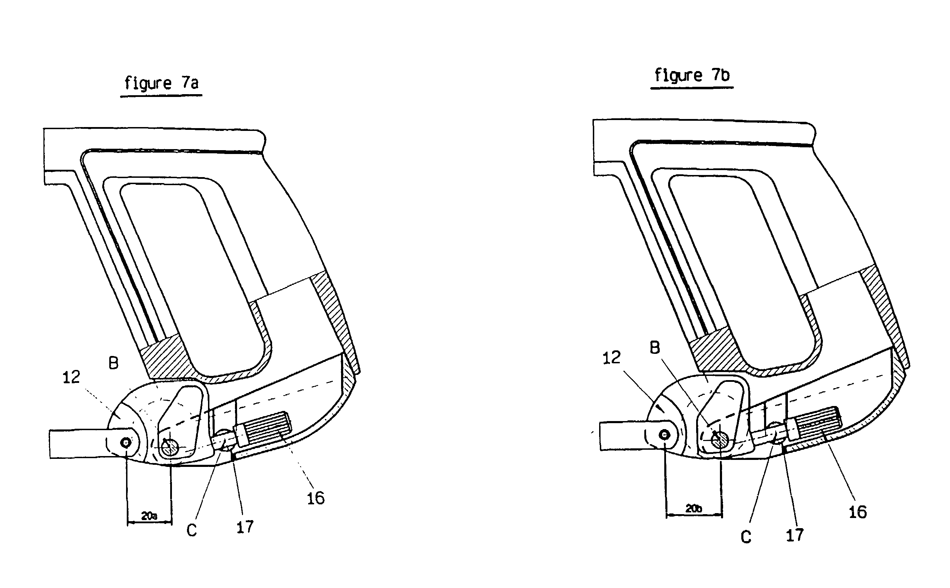

Le levier (5) est pivotable autour de cet axe d'articulation entre une position fermée (en référence aux figures 1, 7a et 7b) et une position ouverte (représentée à la figure 2).

Un trou (12b) est aménagé dans la paroi du support de lame (12) pour recevoir par vissage une des extrémités d'une tige filetée (15).

La tige filetée (15) traverse également avec jeu un trou lisse percé dans un axe d'articulation (17); une molette (16) se visse à l'autre extrémité de la tige filetée (15) de façon à contrôler le déplacement de l'axe d'articulation (17).

Dans un mode de réalisation préférentiel, la tige filetée (15) comporte une section lisse (15a) pour permettre un meilleur coulissement de l'axe d'articulation percé (17).

Une rainure (5a) est aménagée dans le levier (5) de façon à recevoir l'axe d'articulation (17) pour être ainsi solidarisée en articulation avec la tige filetée (15) et indirectement avec le support de lame (12), ledit axe d'articulation (17) pouvant coulisser dans la rainure (5a).

Le support de lame (12), la tige filetée (15), l'axe d'articulation percé (17) et la molette (16) sont des organes constitutifs du système de réglage de lame.

Avantageusement, l'extrémité de la branche (9) comporte au-dessus du téton d'accrochage (14) un ergot de maintien (11) avec un côté incliné (11a) vers l'extérieur du cintre.

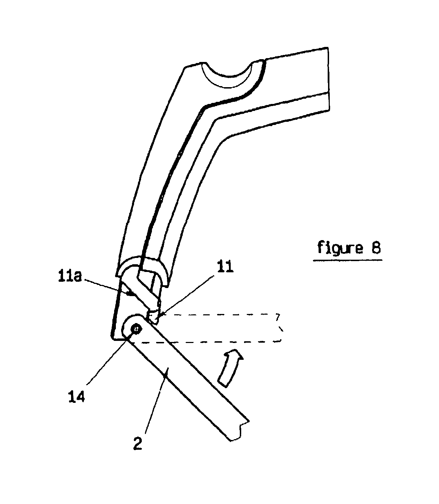

Comme illustré à la figure 8, on positionne la lame (2) parallèlement au côté incliné (11a) de l'ergot (11) afin de l'emboîter par une de ses extrémités sur le téton d'accrochage (14) puis on fait pivoter la lame dans le sens inverse des aiguilles d'une montre pour pouvoir l'enfiler par l'autre de ses extrémités sur le téton d'accrochage (13) du support de lame, le levier (5) en position ouverte permettant une certaine latitude de déplacement dans le plan médian de la monture du support de lame.

Le réglage de la tension est assuré par la rotation plus ou moins importante de la molette (16) sur la tige filetée (15), la molette (16) étant en appui réactif sur l'axe d'articulation percé (17).

La mise en tension de la lame est réalisée par l'effort exercé par l'utilisateur sur le levier (5) de façon à ramener le levier (5) en position fermée passant le point d'équilibre, lorsque les points A, B et C, centres respectifs de l'ergot d'accrochage (14), l'axe d'accrochage (18) et l'axe d'articulation (17), sont alignés. Le levier (5) est alors en position auto-bloquée, le point C étant au-dessus de la droite passant par les points A et B.

La différence des distances (20a)-(20b) correspondant au déplacement du point C génère l'effort de tension sur la lame (2) par déformation "élastique" du cintre (6).

Pour résister aux efforts de déformation, le cintre est de section transversale en "I" (7a). De préférence, cette section transversale en "I" est nervurée localement suivant une section horizontale (7b) passant par le plan médian horizontal de la section transversale en "I" comme illustré à la figure 6. Cette section est évolutive et galbée vers la lame.

Pour améliorer encore la résistance aux efforts de déformation, une lame métallique (7c) de section transversale rectangulaire est insérée dans le cintre, par exemple de section transversale en "I", ladite lame (7c) se prolongeant sensiblement jusqu'à l'extrémité de la branche (9) au niveau du téton d'accrochage (14). Ainsi, cet insert métallique en forme de L garantit la rigidité de l'archet et assure le maintien de l'ergot ou téton d'accrochage en son extrémité avant.

Pour avoir un confort d'utilisation optimum, la face frontale de la branche (9) comporte une zone d'appui ergonomique (10) et la branche supérieure du cintre comporte un positionnement du pouce (10a).

## Revendications

1. Monture de scie à métaux du type archet monobloc comprenant un cintre (6) prolongé d'une part à son extrémité arrière d'une poignée revolver (3) et d'une branche de protection (7) et d'autre part à son extrémité avant d'une branche (9) comportant à son extrémité un téton d'accrochage (14) recevant lune des deux extrémités d'une lame (2) et comprenant un dispositif de mise en tension de lame, ledit dispositif de mise en tension de lame comporte un système de réglage de tension de lame (4), **caractérisé en ce que** ledit dispositif de mise en tension consistant en un levier (5) fixé par un axe d'articulation (18) à une chape d'articulation (8) venant en partie arrière de la branche de protection (7), ledit axe d'articulation (18) constituant l'axe de rotation du levier (5), ledit système de réglage de tension de lame (4) consistant en un support de lame (12) recevant l'autre extrémité de la lame (2) et comportant une lumière (12a) permettant le passage de l'axe d'articulation (18), une tige filetée (15) étant solidarisée d'une part en liaison permanente au support de lame et d'autre part en articulation avec le levier (5) par un axe d'articulation percé (17) d'un trou lisse permettant le passage de la tige filetée sur laquelle est vissée une molette (16), ladite molette (16) faisant appui sur l'axe d'articulation percé (17).

2. Monture selon la revendication 1, **caractérisée en ce que** la partie inférieure de la poignée revolver (3) située entre l'arrière de la chape d'articulation et le levier (5) est de forme conjuguée au système de réglage de façon à recevoir ledit système de réglage de tension de lame lorsque le levier (5) est dans une position fermée et autobloquée.

3. Monture selon la revendication 1, **caractérisée en ce que** la lumière (12a) a sensiblement la forme d'un trapèze dont les angles sont arrondis.

4. Monture selon l'une quelconque des revendications 1 à 3, **caractérisée en ce que** l'axe d'articulation (18) passe à travers la lumière (12a) avec une liberté de latitude dans une direction sensiblement perpendiculaire à un axe longitudinal de la lame.

5. Monture selon l'une quelconque des revendications 1 à 4, **caractérisée en ce qu'**une rainure (5a) est aménagée dans le levier (5) de façon à recevoir l'axe d'articulation percé (17) pour être solidarisé en articulation avec la tige filetée (15).

6. Monture selon l'une quelconque des revendications 1 à 5, **caractérisée en ce que** la tige filetée (15) comporte une section lisse (15a) pour permettre un meilleur coulissement de l'axe d'articulation percé (17).

7. Monture selon l'une quelconque des revendications 1 à 6, **caractérisée en ce que** l'extrémité de la branche (9) comporte au-dessus du téton d'accrochage (14) un ergot de maintien (11).

8. Monture selon la revendication 7, **caractérisée en ce que** l'ergot de maintien (11) a un côté incliné (11a) vers l'extérieur du cintre.

9. Monture selon l'une quelconque des revendications 1 à 7, **caractérisée en ce qu'**une lame métallique (7c) de section transversale rectangulaire est insérée dans le cintre (6), ladite lame (7c) se prolongeant sensiblement jusqu'à l'extrémité de la branche (9) au niveau du téton d'accrochage (14).

10. Monture selon l'une quelconque des revendications 1 à 8, **caractérisée en ce que** le cintre est d'une section transversale en "I".

11. Monture selon la revendication 10, **caractérisée en ce que** la section transversale en "I" est nervurée localement suivant une section horizontale passant par le plan médian de la section transversale en "I".

12. Monture selon l'une quelconque des revendications 8 à 11, **caractérisée en ce que** la section transversale en "I" est évolutive et galbée vers la lame.

## Claims

1. Mounting for a metal saw of the type which is in a solid curved piece, comprising a curve (6) extended at its rear end, on the one hand, by a revolver grip (3) and by a protective arm (7) and at its front end, on the other hand, by an arm (9) which comprises, at its end, an attachment knub (14) accommodating one of the two ends of a blade (2) and comprising a blade tensioning device, said blade tensioning device comprising a blade tension adjustment system (4), **characterised in that** said tensioning device comprises a lever secured by a hinge pin (18) to a hinge fork (8) coming from the rear portion of the protective arm (7), said hinge pin (18) forming the rotational axis of the lever (5), said blade tension adjustment system (4) consisting of a blade carrier (12), which accommodates the other end of the blade (2) and comprises a slot (12a), which permits the hinge pin (18) to pass therethrough, a threaded rod (15) being permanently connected, on the one hand, to the blade carrier and being hinged, on the other hand, to the lever (5) by a hinge pin (17) pierced by a smooth hole which permits the threaded rod, on which is screwed a serrated wheel (16), to pass therethrough, said serrated wheel (16) being supported on the pierced hinge pin (17).

2. Mounting according to claim 1, **characterised in that** the lower portion of the revolver grip (3), situated between the rear of the hinge fork and the lever (5), is configured to be interconnected to the adjustment system so as to accommodate said blade tension adjustment system when the lever (5) is in a closed and self-locked position.

3. Mounting according to claim 1, **characterised in that** the slot (12a) has substantially a trapezoidal configuration, the angles of which are rounded.

4. Mounting according to any of claims 1 to 3, **characterised in that** the hinge pin (18) passes through the slot (12a) with a freedom of latitude in a direction substantially perpendicular to a longitudinal axis of the blade.

5. Mounting according to any one of claims 1 to 4, **characterised in that** a groove (5a) is provided in the lever (5) so as to accommodate the pierced hinge pin (17) to be connected in a hinged manner to the threaded rod (15).

6. Mounting according to any one of claims 1 to 5, **characterised in that** the threaded rod (15) comprises a smooth section (15a) to permit the pierced hinge pin (17) to slide better.

7. Mounting according to any one of claims 1 to 6, **characterised in that** the end of the arm (9) comprises a retaining lug (11) above the attachment knub (14).

8. Mounting according to claim 7, **characterised in that** the retaining lug (11) has an inclined side (11a) towards the exterior of the curved piece.

9. Mounting according to any one of claims 1 to 7, **characterised in that** a metallic blade (7c) of rectangular cross-section is inserted into the curved piece (6), said blade (7c) extending substantially to the end of the arm (9) at the level of the attachment knub (14).

10. Mounting according to any one of claims 1 to 8, **characterised in that** the curved piece has an "I"-shaped cross-section.

11. Mounting according to claim 10, **characterised in that** the "I"-shaped cross-section is grooved locally according to a horizontal section passing through the median plane of the "I"-shaped cross-section.

12. Mounting according to any one of claims 8 to 11, **characterised in that** the "I"-shaped cross-section is evolutive and curved towards the blade.

## Patentansprüche

1. Metall-Sägevorrichtung von Monoblock-Bügelbauart, welche einen Bügel (6) aufweist, der einerseits an seinem hinteren Ende in einen Revolvergriff (3) und einen Schutzarm (7) übergeht und andererseits an seinem vorderen Ende einen Arm (9) hat, welcher an seinem Ende einen Kupplungsansatz (14) zum Aufnehmen eines der beiden Enden eines Sägeblattes (2) aufweist, und die eine Spannvorrichtung für das Sägeblatt hat, wobei die genannte Spannvorrichtung für das Sägeblatt ein Verstellsystem (4) für die Spannung des Sägeblattes aufweist, **dadurch gekennzeichnet, dass** die genannte Spannvorrichtung einen Hebel (5) aufweist, der mittels einer Schwenkachse (18) an einer Schwenkgabel (8) befestigt ist, der einen rückwärtigen Bereich des Schutzarmes (7) bildet, dass die genannte Schwenkachse (18) die Drehachse des Hebels (5) bildet, dass das genannte Verstellsystem (4) für die Spannung des Sägeblattes eine Sägeblatthalterung (12) aufweist, die das andere Ende des Sägeblattes (2) aufnimmt und eine Durchbrechung (12a) hat, welche den Durchtritt der Schwenkachse (18) zulässt, dass eine Gewindestange (15) einerseits immer fest mit der Sägeblatthalterung und andererseits schwenkbar mit dem Hebel (5) mittels einer Schwenkachse (17) verbunden ist, durch die eine glatte Bohrung hindurchführt, die den Durchtritt der Gewindestange ermöglicht, auf der eine Rändelmutter (16) geschraubt ist und dass die genannte Rändelmutter (16) sich an der gelochten Schwenkachse (17) abstützt.

2. Vorrichtung nach Anspruch 1, **dadurch gekennzeichnet, dass** der untere Bereich des Revolvergriffes (3), welcher zwischen der Rückseite der Schwenkgabel und dem Hebel (5) liegt, derart mit dem Verstellsystem gekoppelt ist, dass er das genannte Verstellsystem für die Spannung des Sägeblattes aufzunehmen vermag, wenn der Hebel (5) sich in einer Schließ- und Selbstverriegelungsstellung befindet.

3. Vorrichtung nach Anspruch 1, **dadurch gekennzeichnet, dass** die Durchbrechung (12a) im Wesentlichen die Form eines Trapezes hat, dessen Ecken gerundet sind.

4. Vorrichtung nach einem der Ansprüche 1 bis 3, **dadurch gekennzeichnet, dass** die Schwenkachse (18) durch die Durchbrechung (12a) mit Spiel zu einer Seite in einer Richtung führt, die im Wesentlichen rechtwinklig zur Längsachse des Sägeblattes verläuft.

5. Vorrichtung nach einem der Ansprüche 1 bis 4, **dadurch gekennzeichnet, dass** in dem Hebel (5) eine Nut (5a) derart vorgesehen ist, dass sie die gelochte Schwenkachse (17) aufnehmen kann, damit diese schwenkbar mit der Gewindestange (15) verbunden ist.

6. Vorrichtung nach einem der Ansprüche 1 bis 5, **dadurch gekennzeichnet, dass** die Gewindestange (15) einen glatten Bereich (15a) aufweist, so dass sie in der gelochten Schwenkachse (17) besser zu gleiten vermag.

7. Vorrichtung nach einem der Ansprüche 1 bis 6, **dadurch gekennzeichnet, dass** das Ende des Arms (9) oberhalb des Kupplungsansatzes (14) einen Haltenocken (11) aufweist.

8. Vorrichtung nach Anspruch 7, **dadurch gekennzeichnet, dass** der Haltenocken (11) eine zur Außenseite des Bügels geneigte Seite (11a) hat.

9. Vorrichtung nach einem der Ansprüche 1 bis 7, **dadurch gekennzeichnet, dass** ein Metallblech (7c) mit rechteckigem Querschnitt in dem Bügel (6) eingefügt ist, wobei das genannte Blech (7c) sich im Wesentlichen bis zu dem Ende des Arms (9) in Höhe des Kupplungsansatzes (14) erstreckt.

10. Vorrichtung nach einem der Ansprüche 1 bis 8, **dadurch gekennzeichnet, dass** der Bügel einen I-förmigen Querschnitt hat.

11. Vorrichtung nach Anspruch 10, **dadurch gekennzeichnet, dass** der I-förmige Querschnitt örtlich mit Rippen versehen ist, welche einem Horizontalschnitt folgen, der durch die Mittelebene des I-förmigen Querschnitts führt.

12. Vorrichtung nach einem der Ansprüche 8 bis 11, **dadurch gekennzeichnet, dass** der I-förmige Querschnitt erweiterbar und zu dem Blech hin gewölbt ist.
